(19) Europäisches Patentamt

European Patent Office

Office européen des brevets

(11) **EP 4 393 656 A1**

(12) **EUROPEAN PATENT APPLICATION**
published in accordance with Art. 153(4) EPC

(43) Date of publication:
**03.07.2024 Bulletin 2024/27**

(21) Application number: **23844959.9**

(22) Date of filing: **06.05.2023**

(51) International Patent Classification (IPC):
**B25J 9/16** $^{(2006.01)}$    **G05D 1/20** $^{(2024.01)}$

(52) Cooperative Patent Classification (CPC):
**B25J 9/16; B62D 57/032**

(86) International application number:
**PCT/CN2023/092460**

(87) International publication number:
**WO 2024/021744 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.07.2022 CN 202210877092**

(71) Applicant: Tencent Technology (Shenzhen)
**Company Limited
Shenzhen, Guangdong, 518057 (CN)**

(72) Inventors:
• **WANG, Shuai**
  **Shenzhen, Guangdong 518057 (CN)**
• **ZHENG, Yu**
  **Shenzhen, Guangdong 518057 (CN)**
• **CHI, Wanchao**
  **Shenzhen, Guangdong 518057 (CN)**
• **ZHANG, Jingfan**
  **Shenzhen, Guangdong 518057 (CN)**

(74) Representative: **Nederlandsch Octrooibureau**
  **P.O. Box 29720**
  **2502 LS The Hague (NL)**

(54) **METHOD AND APPARATUS FOR CONTROLLING LEGGED ROBOT, ELECTRONIC DEVICE, COMPUTER-READABLE STORAGE MEDIUM, COMPUTER PROGRAM PRODUCT AND LEGGED ROBOT**

(57)    Provided is a method for controlling a legged robot, wherein the legged robot comprises a base and at least two mechanical legs, and each mechanical leg comprises at least one joint. The method for controlling a legged robot comprises: in response to the legged robot descending to contact a flat surface, determining a first expected path corresponding to the legged robot, and determining a second expected path corresponding to the legged robot, wherein the first expected path indicates an expected path of the center of mass of the legged robot, and the second expected path indicates expected paths of foot ends of the at least two mechanical legs; and controlling, on the basis of a dynamic model corresponding to the legged robot, the first expected path and the second expected path, the action of each joint after the legged robot contacts the flat surface. Further provided are an apparatus for controlling a legged robot, an electronic device, a computer-readable storage medium, a computer program product and a legged robot.

FIG. 2

S201 — In response to a legged robot falling onto the ground to contact a plane, determine a first expected moving trajectory and a second expected moving trajectory corresponding to the legged robot

S202 — Control, based on a dynamic model corresponding to the legged robot, the first expected moving trajectory and the second expected moving trajectory, an action of each joint after the legged robot contacts the plane

Processed by Luminess, 75001 PARIS (FR)

**Description**

RELATED APPLICATION

This application is proposed based on Chinese Patent Application No. 202210877092.6, filed on July 25, 2022, and claims priority to the Chinese Patent Application, which is incorporated herein by reference in its entirety.

FIELD OF THE TECHNOLOGY

The present disclosure relates to planning and control technologies of legged robots in the technical field of legged robots, and in particular, to a method, an apparatus, and an electronic device for controlling a legged robot, a computer-readable storage medium, a computer program product, and a legged robot.

BACKGROUND OF THE DISCLOSURE

With the wide application of artificial intelligence (AI) and legged robot technology in civilian and commercial fields, legged robots based on AI and the legged robot technology play an increasingly important role in fields such as intelligent transportation and smart home, and also face higher requirements.
At present, the legged robot (such as a quadruped robot) is capable of performing a plurality of different actions, for example, bounding and flipping. The legged robot often performs these actions stiffly during landing, and an impact force withstood by each joint is greater than an impact force threshold, which increases the body rebound and increases the probability of damage to the legged robot.

SUMMARY

In view of the foregoing problems, embodiments of the present disclosure provide a method, an apparatus, and an electronic device for controlling a legged robot, a computer-readable storage medium, a computer program product, and a legged robot.
A method for controlling a legged robot is provided, the legged robot including a base and at least two robotic legs, each of the robotic legs including at least one j oint, the method including:

determining a first expected moving trajectory corresponding to the legged robot and determining a second expected moving trajectory corresponding to the legged robot in response to the legged robot falling to contact a plane, the first expected moving trajectory indicating an expected moving trajectory of a center of mass of the legged robot, and the second expected moving trajectory indicating an expected moving trajectory of a foot end of each of the at least two robotic legs; and

controlling, based on a dynamic model corresponding to the legged robot, the first expected moving trajectory, and the second expected moving trajectory, an action of each joint after the legged robot contacts the plane.

An apparatus for controlling a legged robot is provided, the legged robot including a base and at least two robotic legs, each of the robotic legs including at least one j oint, the apparatus including:

a planning and calculation module, configured to determine a first expected moving trajectory corresponding to the legged robot and determine a second expected moving trajectory corresponding to the legged robot in response to the legged robot falling to contact a plane, the first expected moving trajectory indicating an expected moving trajectory of a center of mass of the legged robot, and the second expected moving trajectory indicating an expected moving trajectory of a foot end of each of the at least two robotic legs; and

a control module, configured to control, based on a dynamic model corresponding to the legged robot, the first expected moving trajectory, and the second expected moving trajectory, an action of each joint after the legged robot contacts the plane.

A legged robot is provided, including:

a base;

a lower limb portion, connected to the base, the lower limb portion including at least two robotic legs, each of the robotic legs including a hip joint and a knee j oint, the hip joint including at least two degrees of freedom, and the knee joint including at least one degree of freedom; and

an electronic device, arranged on the legged robot and configured to perform the method for controlling a legged robot provided in the embodiments of the present disclosure.

An electronic device for controlling a legged robot is provided, including:

a processor, and

a memory, having a computer-executable program stored therein, the computer-executable program, when executed by the processor, performing the method for controlling a legged robot provided in the embodiments of the present disclosure.

A computer-readable storage medium is provided, having a computer-executable program stored therein, the computer-executable program, when executed by a processor, causing the processor to perform the method for controlling a legged robot provided in the embodiments of the present disclosure.

A computer program product is provided, including a computer-executable program, the computer-executable program, when executed by a processor, implementing the method for controlling a legged robot provided in the embodiments of the present disclosure.

The embodiments of the present disclosure have at least the following beneficial effects. The center of mass and the trajectory of the robotic leg of the legged robot after landing are planned, and the action of each joint of the legged robot is controlled based on the planned center of mass and trajectory of the foot end of the robotic leg. In this way, during the landing of the legged robot, the impact force withstood by each joint can be reduced, the body rebound can be reduced, and the impact resistance of the legged robot during the landing can be improved, thereby reducing the probability of damage to the legged robot.

BRIEF DESCRIPTION OF THE DRAWINGS

To describe the technical solutions in embodiments of the present disclosure clearly, the following briefly describes the accompanying drawings that need to be used in the description of the embodiments. Apparently, the accompanying drawings described below are merely some exemplary embodiments of the present disclosure, and a person of ordinary skill in the art may still derive other accompanying drawings from these accompanying drawings without creative efforts. The following accompanying drawings are not intentionally scaled to an actual size.

FIG. 1 is a schematic diagram showing a legged robot according to an embodiment of the present disclosure.

FIG. 2 is a flowchart showing a method for controlling a legged robot according to an embodiment of the present disclosure.

FIG. 3 is a schematic diagram showing a moment a legged robot contacts a plane according to an embodiment of the present disclosure.

FIG. 4 is a schematic diagram showing a change in a center of mass during landing of a legged robot according to an embodiment of the present disclosure.

FIG. 5 is a schematic diagram showing that a robotic leg contacts a plane during landing of a legged robot according to an embodiment of the present disclosure.

FIG. 6 is a schematic diagram showing a calculation principle of cubic spline interpolation according to an embodiment of the present disclosure.

FIG. 7 is a diagram showing comparison between a first expected moving trajectory and an actual trajectory of a center of mass of a legged robot according to an embodiment of the present disclosure.

FIG. 8A is a simulation diagram showing a legged robot before landing according to an embodiment of the present disclosure.

FIG. 8B is a simulation diagram showing a legged robot after landing according to an embodiment of the present disclosure.

FIG. 9 is an exemplary block diagram showing a legged robot according to an embodiment of the present disclosure.

FIG. 10 is a structural diagram showing an apparatus for controlling a legged robot according to an embodiment of the present disclosure.

DESCRIPTION OF EMBODIMENTS

To make the objectives, technical solutions, and advantages of the present disclosure clearer, the following describes exemplary embodiments according to the present disclosure in detail with reference to the accompanying drawings. Apparently, the described embodiments are merely some but not all of the embodiments of the present disclosure. It is to be understood that, the present disclosure is not limited by the exemplary embodiments described herein.

As shown in the embodiments of the present disclosure and claims, words such as "a/an", "one", "a kind", and/or "the" do not refer specifically to the singular and may also include the plural, unless the context clearly indicates an exception. In general, terms "comprise" and "include" merely indicate including clearly identified operations and elements. The operations and elements do not constitute an exclusive list, and may also include other operations or elements.

Although the embodiments of the present disclosure make various references to some modules in an apparatus provided in the embodiments of the present disclosure. However, any quantity of different modules may be used and run on a user terminal and/or a server. The modules are merely illustrative, and different aspects of the apparatus and the method may use different modules.

Flowcharts are used in the embodiments of the present disclosure to illustrate operations performed by the method and the apparatus according to the embodiments of the present disclosure. It is to be understood that, the foregoing or following operations are not necessarily strictly performed according to an order. On the contrary, various operations may be performed in reverse order or simultaneously as required. In addition, other operations may also be added to the processes. Alternatively, one or more operations may be deleted from the processes.

To facilitate description of the embodiments of the present disclosure, the following introduces concepts related to the embodiments of the present disclosure.

A legged robot provided in the embodiments of the present disclosure is a robot that uses robotic legs to move. The legged robot is biomimetically designed based on animals, to simulate motion patterns of the animals and replicate the motion capabilities of the animals based on engineering technology and scientific research achievements. The legged robot is adapted to various environments (including a structured environment (such as a road, a railway, and a treated flat road surface) and an unstructured environment (such as a mountain land, a swamp, and a rugged road surface)), may adapt to various changes in a terrain and climb over various obstacles, and may effectively reduce the load and improve energy utilization efficiency of a system. The legged robots may be divided into a monopod robot, a bipedal robot, a quadruped robot, a hexapod robot, an octopod robot, and the like based on quantities of feet. The quadruped robot has higher static stability than the bipedal robot, and moves more simply and flexibly than the hexapod robot and the octopod robot. Therefore, the quadruped robot is a common choice for research on the legged robots. A gait of the quadruped robot refers to coordination among four robotic legs in time and space in order for the quadruped robot to move continuously. The gait of the quadruped robot is derived from a gait of a quadruped animal, which may include, but is not limited to, the following three simplified forms: walk, trot, and bound.

The method for controlling a legged robot provided in the embodiments of the present disclosure may be implemented based on artificial intelligence (AI). AI is a theory, a method, a technology, and an application system that uses a digital computer or a machine controlled by the digital computer to simulate, extend, and expand human intelligence, perceive the environment, acquire knowledge, and use the knowledge to obtain the best result. In other words, AI is a comprehensive technology of computer science, which is used to understand the essence of intelligence and produces a new intelligent machine that can respond in a manner similar to human intelligence. For example, according to the method for controlling a legged robot based on AI, a motion trajectory and a gait of the legged robot can be planned in a manner similar to that of guiding motion of a living animal by human, so that the motion of the legged robot is flexible and bionic. Through research on design principles and implementation methods of various intelligent machines, AI enables the method for controlling a legged robot provided in the embodiments of the present disclosure to automatically and efficiently design the subsequent motion trajectory and gait of the legged robot based on a current motion state of the legged robot.

Based on the above, the method for controlling a legged robot provided in the embodiments of the present disclosure relates to technologies such as AI and machine learning. The method for controlling a legged robot provided in the embodiments of the present disclosure is described below with reference to the accompanying drawings.

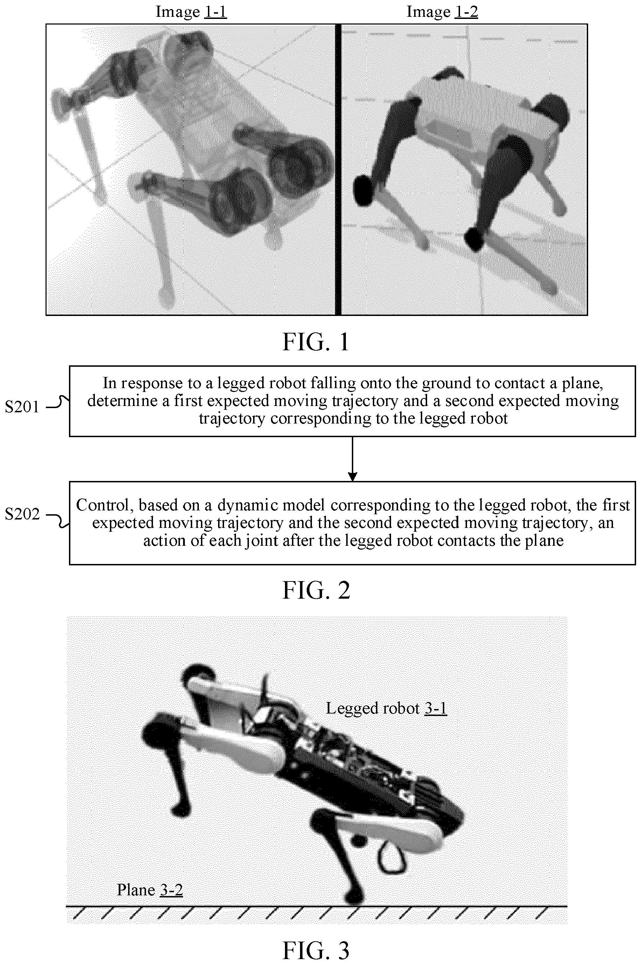

FIG. 1 is a schematic diagram of a legged robot according to an embodiment of the present disclosure.

As shown in FIG. 1, the legged robot (referred to as an exemplary legged robot) provided in the embodiments of the present disclosure is described by using a quadruped robot as an example. An image 1-1 in FIG. 1 shows an internal perspective view of the legged robot, and an image 1-2 shows an external structural diagram of the legged robot.

In the embodiments of the present disclosure, the exemplary legged robot can move based on four robotic legs. Each of the robotic legs may include a thigh and a calf, and each robotic leg may include at least one j oint. For example, each robotic leg may include a plurality of lower limb joints. The plurality of lower limb joints are, for example, a hip joint having two degrees of freedom and a knee joint having one degree of freedom.

In the embodiments of the present disclosure, each robotic leg may further be configured with a plurality of motors. The plurality of motors may be used individually or in combination to control the two degrees of freedom of the hip joint and the degree of freedom of the knee joint of the quadruped robot.

The legged robot may further be equipped with a variety of sensors, such as an inertial measurement unit (IMU) sensor and a joint angle encoder. The IMU sensor may provide an acceleration and pose information of the legged robot in real time. The joint angle encoder may provide joint angle information (such as an angle of the joint angle and an angular velocity feedback value) of each joint of the legged robot in real time.

In the embodiments of the present disclosure, the exemplary legged robot may implement an action such as flipping or bounding under control of the plurality of motors, and land back onto a plane in the form of free fall after performing the actions. To alleviate the stiffness of the actions of the legged robot during the landing, reduce an impact force withstood by each joint and body rebound, and reduce the probability of damage to the legged robot during the landing, the legged robot is often controlled during free landing of the legged robot and during the contact between the legged robot and the plane.

To control the free fall process of the legged robot, for example, the process in which each foot end of the quadruped robot contacts the plane is equivalent to an action process of two virtual springs in x-axis and z-axis (a vertical direction perpendicular to the plane) directions. If a control scheme (such as a PD control scheme) is used to adjust stiffness and damping parameters of the virtual springs, an output torque of each joint motor can be derived equivalently, thereby enabling the legged robot to land dexterously. For another example, a robotic leg and an environment may be equivalent to two different models (such as an RLC model). Based on the two models, data-driven (a machine learning control scheme) may be used to derive the output torque of each joint motor, thereby enabling the legged robot to land dexterously.

However, the foregoing schemes for controlling the free fall process of the legged robot are all establishing a spring damping model based on the robotic leg model or the environmental model of the legged robot. Dynamic constraints and characteristics of the legged robot are reflected by changes in the robotic leg and a center of mass. Therefore, a deviation exists between the scheme of controlling the free fall process of the legged robot and the dynamic constraints and characteristics of the legged robot. This affects a control effect.

Therefore, for the foregoing problems, an embodiment of the present disclosure provides a method for controlling a legged robot. The legged robot includes a base and at least two robotic legs. Each of the robotic legs includes at least one joint. The method includes: determining a first expected moving trajectory corresponding to the legged robot and determining a second expected moving trajectory corresponding to the legged robot in response to the legged robot falling to contact a plane, the first expected moving trajectory indicating an expected moving trajectory of a center of mass of the legged robot, and the second expected moving trajectory indicating an expected moving trajectory of a foot end of each of the at least two robotic legs; and controlling, based on a dynamic model corresponding to the legged robot, the first expected moving trajectory, and the second expected moving trajectory, an action of each joint after the legged robot contacts the plane.

An embodiment of the present disclosure further provides an apparatus for controlling a legged robot. The legged robot includes a base and at least two robotic legs. Each of the robotic legs includes at least one j oint. The apparatus includes: a planning and calculation module, configured to determine a first expected moving trajectory corresponding to the legged robot and determine a second expected moving trajectory corresponding to the legged robot in response to the legged robot falling to contact a plane, the first expected moving trajectory indicating an expected moving trajectory of a center of mass of the legged robot, and the second expected moving trajectory indicating an expected moving trajectory of a foot end of each of the at least two robotic legs; and
a control module, configured to control, based on a dynamic model corresponding to the legged robot, the first expected moving trajectory, and the second expected moving trajectory, an action of each joint after the legged robot contacts the plane.

An embodiment of the present disclosure further provides a legged robot, including: a base; a lower limb portion, connected to the base, the lower limb portion including at least two robotic legs, each of the robotic legs including a hip joint and a knee j oint, the hip joint including at least two degrees of freedom, and the knee joint including at least one degree of freedom; and an electronic device, arranged on the legged robot and configured to perform the method for controlling a legged robot provided in the embodiments of the present disclosure.

An embodiment of the present disclosure provides a computer-readable storage medium, having a computer-executable program stored therein, the computer-executable program, when executed by a processor, causing the processor to perform the method for controlling a legged robot provided in the embodiments of the present disclosure.

An embodiment of the present disclosure provides a computer program product, including a computer-executable program, the computer-executable program, when executed by a processor, implementing the method for controlling a legged robot provided in the embodiments of the present disclosure.

According to the method for controlling a legged robot provided in the embodiments of the present disclosure, the trajectory and gait planning of the legged robot can be automatically implemented, and it can also be ensured that the impact force withstood by each joint and the body rebound are reduced during the landing of the legged robot, to achieve the anti-impact protection effect on the legged robot while ensuring the landing function.

An execution subject of the method for controlling a legged robot provided in the embodiments of the present disclosure described below is an electronic device for controlling the legged robot. In addition, the electronic device may be integrated on the legged robot or independent of the legged robot. This is not limited in the embodiments of the present disclosure.

FIG. 2 is a flowchart showing a method for controlling a legged robot according to an embodiment of the present disclosure. The method for controlling a legged robot provided in this embodiment of the present disclosure may include operations S201 and S202 shown in FIG. 2. As described above, the legged robot includes a base and at least two robotic legs. Each of the robotic legs includes at least one joint.

In S201, in response to the legged robot falling to contact a plane, a first expected moving trajectory corresponding to the legged robot and a second expected moving trajectory corresponding to the legged robot are determined.

The first expected moving trajectory indicates an expected moving trajectory of a center of mass of the legged robot, and the second expected moving trajectory indicates an expected moving trajectory of a foot end away from each of the at least two robotic legs.

As an example, operation S201 may be performed by any electronic device. The electronic device herein may be a terminal or a server. Alternatively, the electronic device herein may be both the terminal and the server, which is not limited. The terminal may be a smart phone, a computer (such as a tablet computer, a laptop, and a desktop computer), a smart wearable device (such as a smart watch and smart glasses), a smart voice interactive device, a smart home appliance (such as a smart television), an onboard terminal, an aircraft, or the like. The server may be an independent physical server, or may be a server cluster formed by a plurality of physical servers or a distributed system, and may further be a cloud server providing basic cloud computing services such as cloud service, a cloud database, cloud computing, a cloud function, cloud storage, a network service, cloud communication, a middleware service, a domain name service, a security service, a content delivery network (CDN), and a big data and artificial intelligence platform.

In this embodiment of the present disclosure, the terminal and the server may be located within or outside a blockchain network, which is not limited. In this embodiment of the present disclosure, the terminal and the server may also upload any data stored internally to the blockchain network for storage to prevent the data stored internally from being tampered with and improve data security.

For example, during falling of the legged robot, the contact status between the at least two robotic legs of the legged robot and the plane (such as the ground and a table top) may change, so that the legged robot may include a plurality of motion forms during the contact with the plane, such as a form in which all the robotic legs leave the plane, a form in which some of the robotic legs contact the plane, and a form in which all the robotic legs contact the plane. The legged robot falls at different initial velocities. Therefore, contact information of the contact between the legged robot and the plane needs to be determined, and the first expected moving trajectory and the second expected moving trajectory are determined based on a pose and state information of the legged robot at the contact moment. The process of determining the contact information of the contact between the legged robot and the plane is described later with reference to FIG. 3, and details are not described herein in the embodiments of the present disclosure.

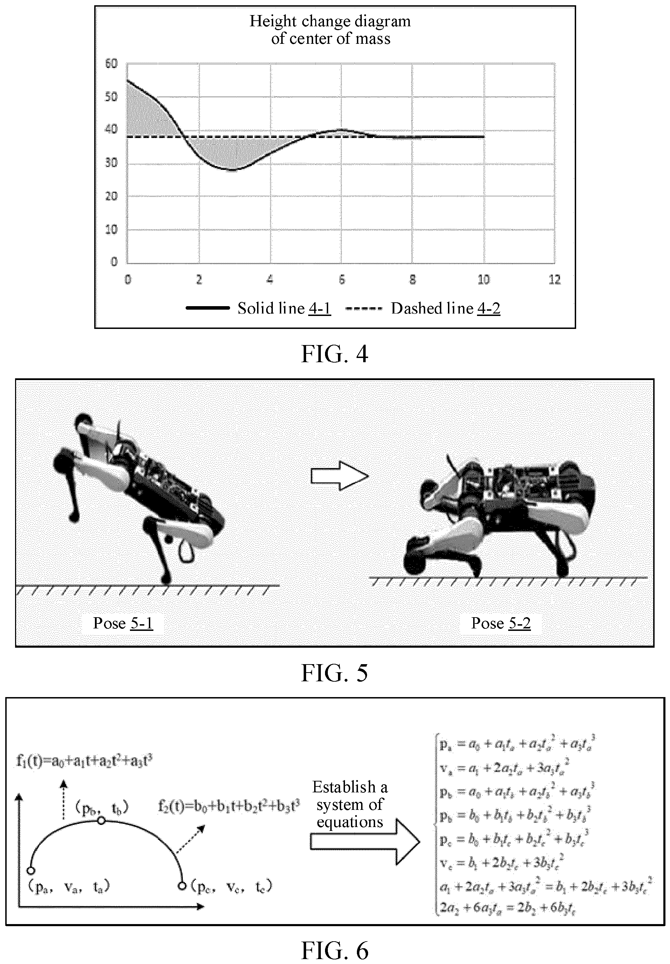

As described above, the first expected moving trajectory indicates the expected moving trajectory of the center of mass of the legged robot. For example, the first expected moving trajectory may include expected position information, velocity information, and acceleration information of the center of mass of the legged robot at each time step. The first expected moving trajectory may be represented by a timing value sequence composed of information related to the center of mass corresponding to each time step. Certainly, the first expected moving trajectory may also be represented by another data structure, and the present disclosure is not limited thereto. The process of determining the first expected moving trajectory is described later with reference to FIG. 4, and details are not described herein in the present disclosure.

An end of the robotic leg away from the base is referred to as a foot end, and the second expected moving trajectory indicates the expected moving trajectory of the foot end of each of at least two robotic legs. For example, the second expected moving trajectory may include expected position information, velocity information, acceleration information, angular velocity information, angular acceleration information, and the like of the foot end of each robotic leg at each time step. For another example, the second expected moving trajectory may further include expected position information, velocity information, acceleration information, angular velocity information, angular acceleration information, and the like of each joint of each robotic leg at each time step. Similarly, the second expected moving trajectory may be represented by a timing sequence composed of information related to each robotic leg corresponding to each time step. Certainly, the second expected moving trajectory may also be represented by another data structure, and the present disclosure is not limited thereto. The process of determining the second expected moving trajectory is described later with reference to FIG. 5 and FIG. 6, and details are not described herein in the present disclosure.

A time step may also be referred to as a frame. A time difference between adjacent time steps may be the same or different. For example, because a change in the action and the force of the legged robot is greater than a change threshold during a period of time immediately after the legged robot comes into contact with the plane, a difference between the time steps may be less than a duration threshold, thereby improving flexibility of motion control of the legged robot in the early stage. In a process of the legged robot gradually reaching a stable state, the difference between the time steps may be greater than the duration threshold to save computing power. The time difference between adjacent time steps is not limited in the embodiments of the present disclosure.

In S202, an action of each joint after the legged robot contacts the plane is controlled based on a dynamic model corresponding to the legged robot, the first expected moving trajectory, and the second expected moving trajectory.

In an implementation, a control signal is generated based on information indicated by the dynamic model corresponding to the legged robot, the first expected moving trajectory, and the second expected moving trajectory, to control the legged robot or one or more portions of the legged robot to perform related actions. Specifically, in an example, the control signal controls a single robotic leg of the legged robot to first contact the plane and maintains the contact position unchanged, and controls the remaining robotic leg to contact the plane in sequence and then maintains the contact with the plane until the center of mass of the legged robot reaches an expected resting height. In another example, the control signal can be generated based on the contact force between the plane and the legged robot at each time step to control the legged robot such that an actual trajectory of the center of mass of the legged robot is consistent with the first expected moving trajectory. In another example, the control signal can be generated based on a motor torque provided by each joint motor at each time step, to control the legged robot such that a trajectory of the foot end of each of the at least two robotic legs is consistent with the second expected moving trajectory.

The dynamic model is configured to determine a change relationship among motion information (for example, including an angle, an angular velocity, an angular acceleration, and a joint torque) of each joint, motion information of the center of mass (for example, including an angle, an angular velocity, and an angular acceleration), and an external contact force. In other words, the dynamic model corresponding to the legged robot is configured to represent the change relationship among the following information during the motion of the legged robot: each joint, an angle, an angular velocity, and an angular acceleration respectively corresponding to the center of mass, the joint torque, and the external contact force. For example, the dynamic model may describe the foregoing change relationship from the perspective of an energy change. For example, the dynamic model may also describe the foregoing change relationship from the perspective of a momentum change or a force change. This is not limited in the present disclosure.

In the process from a moment the legged robot falls to contact the plane to a moment the legged robot stands on the plane stably, an acting force withstood by the legged robot includes gravity, a driving force of each joint motor, and a contact force (also referred to as a support force) applied to the legged robot by the plane. Based on the three forces of the gravity, the driving force, and the contact force, and basic information of the legged robot such as a size, a mass, a moment of inertia, and a joint connection mode of each part of a body of the legged robot, the dynamic model corresponding to the legged robot may be correspondingly established. The contact force and the driving force withstood by the legged robots with different poses are different. A contact force between the plane and the legged robot at each time step is determined based on the dynamic model corresponding to the legged robot, so that an actual trajectory of the center of mass of the legged robot is consistent with the first expected moving trajectory.

In the embodiments of the present disclosure, a motor torque provided by each joint motor at each time step may also be determined based on the dynamic model corresponding to the legged robot and the contact force between the legged robot and the plane at each time step, so that the trajectory of the foot end of each of the at least two robotic legs is consistent with the second expected moving trajectory.

In other words, through the dynamic model, the first expected moving trajectory, and the second expected moving trajectory, the contact force between the plane and the legged robot is determined, and the motor torque provided by each joint motor is determined, and the action of each joint is controlled based on the determined contact force and motor torque.

"Consistency" in the embodiments of the present disclosure means that during actual real machine testing, the actual trajectory of the center of mass of the legged robot is very close to or even the same as the first expected moving trajectory (a trajectory deviation is less than a trajectory deviation threshold), and the trajectory of the foot end away from each of the at least two robotic legs is very close to or even the same as the second expected moving trajectory. Due to the limitation on the performance of the j oint motor, the j oint motor often cannot output ideal torque. In addition, considering a change in the external environment (for example, sudden occurrence of disturbances such as wind), it is often difficult to control the legged robot to fully follow the first expected moving trajectory and the second expected moving trajectory. Therefore, the consistency described in the embodiments of the present disclosure may mean that a difference between the actual trajectory and the expected moving trajectory is less than a difference threshold.

In some embodiments of the present disclosure, the contact force required to cause the center of mass of the legged robot to reach the position, the velocity, and the acceleration indicated by the first expected moving trajectory at each time step may be solved correspondingly based on the dynamic model corresponding to the legged robot. The contact force is the support force provided by the plane to the foot end of each robotic leg. Moreover, joint control information required to cause the robotic leg of the legged robot to reach the pose indicated by the second expected moving trajectory at each time step may be solved based on the dynamic model corresponding to the legged robot and the foregoing contact force.

In the embodiments of the present disclosure, the joint control information may be either an acceleration of each joint motor or a torque of the joint motor. In an actual physical system, a difference exists between measurement accuracy of the acceleration and the torque of the joint motor. Therefore, in a practical application, a person skilled in the art may select a physical quantity with higher accuracy from the acceleration and the torque of the joint motor for subsequent calculation based on an actual situation.

FIG. 3 is a schematic diagram showing a moment a legged robot 3-1 contacts a plane 3-2 according to an embodiment of the present disclosure.

As described above, landing buffer of the legged robot may be implemented by determining a contact state between the at least two robotic legs and the plane at a current moment. The so-called current moment refers to a most recent system moment as time progresses during landing of the legged robot. For example, the contact state between the at least two robotic legs and the plane at the current moment includes: information such as whether the at least two robotic legs of the legged robot contact the plane, a quantity of contact points between the at least two robotic legs and the plane, and positions of the contact points, to determine the first expected moving trajectory and the second expected moving trajectory of the legged robot.

In some embodiments of the present disclosure, the contact state is determined by current state information corresponding to the legged robot at the current moment.

In the embodiments of the present disclosure, an IMU sensor in the legged robot may be invoked to determine the current state information of the legged robot. For example, first, acceleration information (which may include accelerations of the legged robot in a plurality of directions (such as a vertical direction and a horizontal direction)) of the legged robot at the current moment and current pose information may be collected by using the IMU sensor, and a joint angle encoder is invoked to determine joint angle information (such as an angle of a joint angle and an angular velocity feedback value) of each joint of the legged robot at the current moment. Next, the current pose information and the joint angle information (such as the angle of the joint angle and the angular velocity feedback value) may be imported into a leg odometry to calculate position information (which may be represented by y1). The position information may include calculated positions of at least two robotic legs of the legged robot at the current moment. In addition, the acceleration information may be inputted into a state space observer, so that the state space observer may output a position observation result (which may be represented by ym) based on the acceleration information and a historically obtained state estimation result of the legged robot at the current moment. The position observation result may include observed positions of the at least two robotic legs of the legged robot at the current moment. The state estimation result of the legged robot at the current moment may be obtained by estimating a state of the legged robot at the current moment when a previous moment of the current moment arrives. The state estimation result of the legged robot at the current moment may be stored in a vector or another data structure, which is not limited. Then a state of the legged robot at a next moment of the current moment may be estimated based on the position information and the position observation result.

For example, the position information and the position observation result may also be used as input of an extended Kalman filter (EKF) unit to perform state estimation by using the unit, to obtain the state estimation result of the legged robot at the next moment. The so-called EKF is an extended form of a standard Kalman filter (a Kalman filter for short) in a nonlinear situation. Linearization of a nonlinear function is implemented by performing Taylor expansion on the nonlinear function, omitting a higher-order term, and retaining a first-order term of an expansion term.

In the embodiments of the present disclosure, the position information and the position observation result may alternatively be used as input of the Kalman filter unit or input of the state estimation model obtained based on machine learning, to perform state estimation by using the Kalman filter unit or the state estimation model, to obtain the state estimation result of the legged robot at the next moment. The state estimation result of the legged robot at the next moment may be used for both control of the legged robot and input of the state space observer during the next state estimation. In other words, the estimation result obtained through the state estimation may be used for feedback control of the legged robot to form a closed loop.

Several implementations of determining the contact information based on the current state information of the legged robot are described below.

Because a sudden change to any state value corresponding to the robotic leg may occur when the contact information between the robotic leg and the plane changes, the contact information between the robotic leg and the plane at the current moment may be determined by using the current state value of the robotic leg. Therefore, in the embodiments of the present disclosure, the manner of determining the contact information based on the current state information includes: obtaining a historical state value of any robotic leg at a previous moment of a current moment, and determining a current state value of any robotic leg from the current state information, so that it may be determined, based on the historical state value, whether a sudden change to the current state value of any robotic leg occurs.

In the embodiments of the present disclosure, the sudden change to the current state value means that a difference between the current state value and the historical state value is greater than a preset difference. Based on this, a difference between the historical state value and any current state value may be calculated. If the calculated difference is greater than the preset difference, it is determined that a sudden change to the current state value occurs. If the calculated difference is greater than the preset difference, it is determined that no sudden change to the current state value occurs. For example, the historical state value is set to 20, and the preset difference is set to 50. If the current state value is 100, it may be determined that a sudden change to the current state value occurs because 100 minus 20 is equal to 80 and 80 is greater than 50. If the current state value is 30, it may be determined that no sudden change to the current state value occurs because 30 minus 20 is equal to 10 and 10 is less than 50.

If it is determined, based on the historical state value, that a sudden change to the current state value of any robotic leg occurs, and the current state value of the robotic leg is greater than the historical state value, it is determined that the robotic leg contacts the plane at the current moment. If it is determined, based on the historical state value, that no sudden change to the current state value of any robotic leg occurs, the contact information between the robotic leg and the plane at the previous moment is used as the contact information of the current moment. In other words, if any robotic leg contacts the plane at the previous moment, it is determined that the robotic leg also contacts the plane at the current moment. If any robotic leg does not contact the plane at the previous moment, it is determined that the robotic leg does not contact the plane at the current moment.

In some embodiments of the present disclosure, the current state information may include a joint motor torque or a current value or a voltage value of the at least two robotic legs.

When the robotic leg of the legged robot does not contact the plane (for example, the robotic leg does not contact the ground) and is suspended in the air, the load of the robotic leg is only a mass of the robotic leg. Because the mass of the robotic leg of the legged robot is negligible with respect to an overall mass, the load is less than a load threshold, and a feedback current value of each joint and the joint motor torque are relatively less than corresponding thresholds. When the robotic leg of the legged robot contacts the plane (for example, the robotic leg contacts the ground), the load of the legged robot includes its total mass plus an equivalent inertial force of moving downward under the action of inertia thereof. Therefore, the load is greater than the load threshold, and the feedback current value of each joint and the joint motor torque are relatively greater than the corresponding thresholds. Based on this, when a sudden change in the joint motor torque or the feedback current value from being small to large is detected (a variation is greater than a variation threshold value within the duration threshold), it is determined that the legged robot lands from the air to the plane (such as the ground).

In some embodiments of the present disclosure, the current state information includes a height of the center of mass and a pose of the center of mass of the legged robot, and current joint angle information corresponding to the at least two robotic legs.

In the embodiments of the present disclosure, a moment the foot end of the legged robot contacts the plane may be calculated based on the height of the center of mass and the pose of the center of mass of the legged robot detected by an external vision or motion capture system and the joint angle information of the legged robot, to determine whether the corresponding leg contacts the plane at the current moment.

The manner of detecting the contact information between the robotic leg and the plane at the current moment based on the current state information includes: calculating a height of any robotic leg from the plane based on the height of the center of mass, the pose of the center of mass, and the current joint angle information corresponding to any robotic leg; determining that any robotic leg contacts the plane at the current moment if the calculated height is less than or equal to a height threshold (such as a numerical value 0 or 0.005); and determining that any robotic leg does not contact the plane at the current moment if the calculated height is greater than the height threshold.

In some embodiments of the present disclosure, the current state information may include a current plantar tactile feedback value corresponding to the at least two robotic legs, the plantar tactile feedback value being generated by using a plantar tactile sensor of the corresponding robotic leg.

In the embodiments of the present disclosure, it may be determined, by using the plantar tactile sensor, whether the corresponding robotic leg contacts the plane at the current moment. In addition, when any plantar tactile sensor detects that the corresponding robotic leg contacts the plane, a first numerical value is generated as the plantar tactile feedback value, and when it is detected that the corresponding leg does not contact the plane, a second numerical value is generated as the plantar tactile feedback value. The first numerical value and the second numerical value herein may be set based on actual needs. For example, the first numerical value is set to a numerical value 1, and the second numerical value is set to a numerical value 0, or the first numerical value is set to the numerical value 0, and the second numerical value is set to the numerical value 1. The manner of detecting the contact information between the robotic leg and the plane at the current moment based on the current state information includes: obtaining the current plantar tactile feedback value corresponding to the robotic leg from the current state information; determining that any robotic leg contacts the plane at the current moment if the obtained current plantar tactile feedback value is the first numerical value; and determining that any robotic leg does not contact the plane at the current moment if the obtained current plantar tactile feedback value is the second numerical value.

In some embodiments of the present disclosure, the current state information includes a current acceleration of the legged robot in the vertical direction. At the previous moment of the current moment, a historical acceleration of the legged robot in the vertical direction is known. If it is determined, based on the historical acceleration, that a sudden change to the current acceleration occurs, it is determined that the legged robot has landed.

When the legged robot stably stands on the plane, the acceleration of the legged robot in a z-axis direction collected by the IMU sensor is twice an acceleration of gravity g. When the legged robot is completely weightless in the air, the acceleration of the legged robot in the z-axis direction collected by the IMU sensor is close to 0. In both a process in which the legged robot steps hard on the plane before preparing to lift, and a process in which the legged robot buffers toward the plane after landing, the acceleration of the legged robot in the z-axis direction collected by the IMU sensor is greater than twice the acceleration of gravity g. It may be learned accordingly that at a moment the legged robot lands, a sudden change to the acceleration of the legged robot in the vertical direction occurs.

In the embodiments of the present disclosure, a sudden change in the current acceleration means that a difference between the current acceleration and the historical acceleration is greater than a difference threshold. Based on this, the electronic device may calculate the difference between the historical acceleration and the current acceleration. If the calculated difference is greater than the difference threshold, it is determined that a sudden change to the current acceleration occurs. If the calculated difference is not greater than the difference threshold, it is determined that no sudden change to the current acceleration occurs. For example, the historical acceleration is set to 2, and the difference threshold is set to 5. If the current acceleration is 9, then it may be determined that a sudden change to the current acceleration occurs because 9 minus 2 is equal to 7 and 7 is greater than 5. If the current acceleration is 4, then it may be determined that no sudden change to the current acceleration occurs because 4 minus 2 is equal to 2 and 2 is less than 5.

It is to be understood that the foregoing illustrates some implementations of determining the contact information of the robotic leg by using examples, and is not exhaustive. The embodiments of the present disclosure are not limited thereto.

Next, the process of determining the first expected moving trajectory of the legged robot is described with reference to FIG. 4. FIG. 4 is a diagram showing a change in a height of a center of mass of a legged robot during landing according to an embodiment of the present disclosure.

Two curves are shown in FIG. 4. A solid line 4-1 is a schematic curve of a position and the height of the center of mass of the legged robot varying with a time step during the landing, an x-axis represents the time step, a y-axis represents the height (in centimeters), and a dashed line 4-2 is the height of the center of mass of the legged robot in a static state. The solid line 4-1 schematically shows a change in a component of a first expected moving trajectory in a z-axis direction. As shown by the solid line 4-1, after the legged robot contacts the ground, the height of the center of mass of the legged robot gradually decreases and then gradually increases.

As shown in FIG. 4, the legged robot first falls at a relatively large acceleration (greater than an acceleration threshold) until a single robotic leg contacts the plane. In this case, the robotic leg contacting the plane withstands an acting force provided by the plane, and a velocity at which the center of mass drops gradually decreases. As four robotic legs contact the plane in sequence, the four robotic legs together withstand the acting force applied to the legged robot by the plane, and always maintain the contact with the plane until the center of mass of the legged robot reaches an expected resting height.

Based on this, to implement the buffer effect of the legged robot during the landing and reduce the body rebound of the legged robot, an optimization objective may be set based on a relationship between the solid line 4-1 and the dashed line 4-2 in FIG. 4, so that the expected moving trajectory achieves the expected buffer effect as far as possible. For example, the optimization objective may be a reduction in an overshoot, a smaller integral of the height in the vertical direction over time, a minimum height being greater than a safety height threshold, a change value of a force being less than a change value threshold, and a change speed of the height in the vertical direction required to satisfy a specific constraint, and the like.

In some embodiments of the present disclosure, an approximate model corresponding to the legged robot may be used to determine the expected moving trajectory of the center of mass of the legged robot. In the approximate model, the legged robot is approximately a single rigid body, and a resultant force of the at least two robotic legs forms upward thrust on the single rigid body during the contact between the legged robot and the plane. Further, a support force of the legged robot is determined based on the upward thrust on the single rigid body.

For example, the legged robot may be approximated as a single rigid body having a mass of m. In a case that the legged robot includes four robotic legs, the resultant force of the four robotic legs forms upward thrust u on the single rigid body. Based on such an approximate model and according to the Newton's second law, Formula (1) (referred to as a dynamic equation) may be determined.

$$m\ddot{x} = u + mg \qquad (1)$$

where a positive direction is vertically upward, $g$ is a gravity coefficient which is equal to -9.81 (a negative sign indicates that a direction of gravity is vertically downward), and $\ddot{x}$ indicates an acceleration in the vertical direction.

The dynamic equation is written in the form of a state space representation, that is, Formula (2) show below.

$$\begin{bmatrix} \dot{x} \\ \ddot{x} \\ \dot{g} \end{bmatrix} = \begin{bmatrix} 0 & 1 & 0 \\ 0 & 0 & 1 \\ 0 & 0 & 0 \end{bmatrix} \begin{bmatrix} x \\ \dot{x} \\ g \end{bmatrix} + \begin{bmatrix} 0 \\ \frac{1}{m} \\ 0 \end{bmatrix} u \qquad (2)$$

Formula (2) may be abbreviated to the form of Formula (3). In the embodiments of the present disclosure, bold is used to represent a vector (matrix).

$$\dot{x} = A_c x + B_c u \qquad (3)$$

$$A_c = \begin{bmatrix} 0 & 1 & 0 \\ 0 & 0 & 1 \\ 0 & 0 & 0 \end{bmatrix}, B_c = \begin{bmatrix} 0 \\ \frac{1}{m} \\ 0 \end{bmatrix}.$$

where ⠀⠀⠀⠀⠀⠀⠀⠀⠀⠀⠀⠀. Correspondingly, Formula (3) is discretized based on the time step (a length of the time step is $\Delta t$), and Formula (4) may be obtained.

$$x_{i+1} = \dot{x}_i \Delta t + x_i = (A_c x_i + B_c u_i)\Delta t + x_i = (A_c \Delta t + I)x_i + B_c \Delta t u_i \qquad (4)$$

Let $A_d = A_c \Delta t + I$, and $B_d = B_c \Delta t$. Based on model predictive control (MPC), Formula (5) may be obtained from Formula (4).

$$\begin{bmatrix} x_1 \\ x_2 \\ x_3 \\ \vdots \\ x_k \end{bmatrix} = \begin{bmatrix} A_d & 0 & 0 & \cdots & 0 \\ 0 & A_d^2 & 0 & \cdots & 0 \\ 0 & 0 & A_d^3 & \cdots & 0 \\ \vdots & \vdots & \vdots & \vdots & \vdots \\ 0 & 0 & 0 & \cdots & A_d^k \end{bmatrix} \begin{bmatrix} x_0 \\ x_0 \\ x_0 \\ \vdots \\ x_0 \end{bmatrix} +$$

$$\begin{bmatrix} B_d & 0 & 0 & \cdots & 0 \\ A_d B_d & B_d & 0 & \cdots & 0 \\ A_d^2 B_d & A_d B_d & B_d & \cdots & 0 \\ \vdots & \vdots & \vdots & \vdots & \vdots \\ A_d^{k-1} B_d & u_d^{k-1} B_d & A_d^{k-2} B_d & \cdots & B_d \end{bmatrix} \begin{bmatrix} u_0 \\ u_1 \\ u_2 \\ \vdots \\ u_{k-1} \end{bmatrix} \qquad (5)$$

where $x_1$ represents a vector corresponding to a first time step that is composed of the height of the center of mass in the vertical direction, a velocity of the center of mass in the vertical direction, and the acceleration of gravity, $x_2$ represents a vector corresponding to a second time step that is composed of the height of the center of mass in the vertical direction, the velocity of the center of mass in the vertical direction, and the acceleration of gravity, $x_k$ represents a vector corresponding to a $k^{th}$ time step that is composed of the height of the center of mass in the vertical direction, a velocity of the center of mass in the vertical direction, and the acceleration of gravity, and so on. $x_0$ represents a vector corresponding to an initial moment that is composed of the height of the center of mass in the vertical direction, a velocity of the center of mass in the vertical direction, and the acceleration of gravity. Formula (5) may also be abbreviated as Formula (6).

$$X = A_{qp}x_0 + B_{qp}U \tag{6}$$

$$\text{where } X = \begin{bmatrix} x_1 \\ x_2 \\ x_3 \\ \vdots \\ x_k \end{bmatrix}, \quad A_{qp} = \begin{bmatrix} A_d & 0 & 0 & \cdots & 0 \\ 0 & A_d^2 & 0 & \cdots & 0 \\ 0 & 0 & A_d^3 & \cdots & 0 \\ \vdots & \vdots & \vdots & \vdots & \vdots \\ 0 & 0 & 0 & \cdots & A_d^k \end{bmatrix}, \quad B_{qp} = $$

$$\begin{bmatrix} B_d & 0 & 0 & \cdots & 0 \\ A_d B_d & B_d & 0 & \cdots & 0 \\ A_d^2 B_d & A_d B_d & B_d & \cdots & 0 \\ \vdots & \vdots & \vdots & \vdots & \vdots \\ A_d^{k-1} B_d & u_d^{k-1} B_d & A_d^{k-2} B_d & \cdots & B_d \end{bmatrix}, \text{ and } U = \begin{bmatrix} u_0 \\ u_1 \\ u_2 \\ \vdots \\ u_{k-1} \end{bmatrix}.$$

A mathematical expression corresponding to each time step is described in Formula (6). Based on this, the optimization objective corresponding to this embodiment of the present disclosure may be designed correspondingly based on the buffer effect expected to achieve during the falling of the legged robot, to achieve the solution of the optimal first expected moving trajectory. For example, the first expected moving trajectory causes combination values of the following to reach an extreme value: a fluctuation quantity of the center of mass of the legged robot, a total quantity of impact forces withstood by the legged robot, a squatting amount of the legged robot, and a sudden change amount of the impact forces withstood by the legged robot. The foregoing may each have a corresponding weight coefficient and combined in various manners.

For example, the optimization objective function - Z function shown in Formula (7) may be set to solve optimal thrust U.

$$\underset{U,\underline{x}}{\mathrm{argmin}} Z = \| A_{qp}X_0 + B_{qp}U - X_{\mathrm{ref}} \|_L^2 + \| U \|_K^2 + \| h - \underline{x} \|_Q^2 + \| u_{k+1} - u_k \|_W^2 \tag{7}$$

where $X_{\mathrm{ref}}$ is a constant vector, which represents a resting height shown in the dashed line in FIG. 4. $\underline{x}$ represents a minimum height of the center of mass in the whole process.

The first term $\| A_{qp}X_0 + B_{qp}U - X_{\mathrm{ref}} \|_L^2$ of the Z function may be used as a representation form of the fluctuation quantity of the center of mass of the legged robot. To be specific, the legged robot is to satisfy a weighted value of a dynamic equation (the weight coefficient is L). For example, in FIG. 4, the first term is shown as a weighted value of an area of a gray region. A smaller $\| A_{qp}X_0 + B_{qp}U - X_{\mathrm{ref}} \|^2$ leads to a smaller fluctuation of the center of mass and more stability of the legged robot during falling of the legged robot.

The second term $\| U \|_K^2$ of the Z function may be used as a representation form of a total quantity of impact forces withstood by the legged robot, that is, a weighted value of an integral of a sum of reaction forces of the plane withstood by the legged robot over time (the weight coefficient is $K$). A smaller $\| U \|^2$ leads to a smaller sum of the impact forces withstood by the legged robot during the falling of the legged robot.

The third term $\| h - \underline{x} \|_Q^2$ of the Z function represents a weighted value of a distance between a lowest point of the center of mass of the legged robot and the resting height during the whole falling (the weight coefficient is $Q$). A smaller $\| h - \underline{x} \|^2$ indicates a lower degree of squatting of the legged robot during the falling of the legged robot (to be specific, the legged robot can still maintain balance without squatting too low (below a squat threshold)). The third $\| h - \underline{x} \|_Q^2$ term of the Z function may be used as a representation form of a squatting amount of the legged robot.

The fourth term $\| u_{k+1} - u_k \|_W^2$ of the Z function represents a weighted value of a difference in the reaction forces provided by the plane to the legged robot between adjacent time steps (the weight coefficient is W). A smaller $\|$

$u_{k+1}$ - $u_k \parallel^2$ indicates a smaller sudden change of the impact force withstood by the legged robot during falling of the legged robot. The fourth term $\parallel u_{k+1} - u_k \parallel_W^2$ of the $Z$ function may be used as a representation form of a sudden change amount of the impact force withstood by the legged robot.

The foregoing is just a combination of the $Z$ function. The foregoing terms of the $Z$ function are just exemplary representation forms of the fluctuation quantity of the center of mass of the legged robot, the total quantity of impact forces withstood by the legged robot, the squatting amount of the legged robot, and the sudden change amount of the impact force withstood by the legged robot. The embodiments of the present disclosure are not limited thereto.

Importance corresponding to each term is adjusted by using the foregoing weight coefficients in the embodiments of the present disclosure. For example, a larger **K** indicates a higher degree of importance of the impact force withstood by the legged robot in the method for controlling a legged robot provided in the embodiments of the present disclosure

In the embodiments of the present disclosure, a plurality of weighting schemes are provided. For example, the weighting scheme may be a multiplicative weighting scheme, and the first term of the $Z$ function may be expressed as $(A_{qp}X_0 + B_{qp}U - X_{ref})^T L(A_{qp}X_0 + B_{qp}U - X_{ref})$. The weighting scheme may alternatively be a power weighting scheme or an addition scheme. The embodiments of the present disclosure are not limited thereto. The remaining terms of the $Z$ function may alternatively be calculated by using different weighting schemes, and so on. The details are not described herein in the embodiments of the present disclosure.

The following constraints also need to be considered in the process of solving the $Z$ function.

For example, a first constraint is $u_0 \leq u^U$. $u_0$ represents an impact force (referred to as an instantaneous impact force) withstood by the legged robot at a first instant (referred to as an instantaneous moment) the legged robot contacts the plane. The impact force is less than a maximum impact force $u^U$ withstandable by the legged robot. The maximum impact force $u^U$ withstandable by the legged robot depends on structural characteristics of the legged robot and strength of a rigid body, and an example value thereof is 200 N. The present disclosure is not limited by the example value.

For example, a second constraint is $F^L \leq u \leq F^U$. $F^L$ represents a lower limit of a support force that the plane can provide, and $F^U$ represents an upper limit of the support force that the plane can provide. $F^L$ is usually 0 because the support force cannot be less than 0.

For example, a third constraint is $[-B_{qp} \quad I]\begin{bmatrix} U \\ \underline{x} \end{bmatrix} \leq A_{qp}x$. The third constraint indicates that a height of the center of mass of the legged robot in a z-axis direction at each moment is always greater than a minimum height $\underline{x}$. $\underline{x}$ is a column vector composed of lowest height sequence values.

In addition, depending on different configurations of the legged robot, more or fewer constraints (relative to the first constraint, the second constraint, and the third constraint) may alternatively be included. The embodiments of the present disclosure are not limited thereto.

Mathematical equivalent transformation is performed on Formula (7) to obtain Formula (8).

$$\underset{U,\underline{x}}{\arg\min}Z = \parallel A_{qp}X_0 + B_{qp}U \parallel_L^2 + \parallel X_{ref} \parallel_L^2 - 2(A_{qp}X_0 + B_{qp}U)^T LX_{ref} + U^T KU +$$

$$h^T Q h + \underline{x}^T Q \underline{x} - 2\underline{x}^T Q h + U^T W U \qquad (8)$$

Mathematical equivalent transformation is performed on Formula (8) to obtain Formula (9).

$$\underset{U,\underline{x}}{\arg\min}Z = X_0^T A_{qp}^T L A_{qp} X_0 + 2U^T B_{qp}^T L A_{qp} X_0 + U^T B_{qp}^T L B_{qp} U + \parallel X_{ref} \parallel_L^2 -$$

$$2A_{qp}X_0 LX_{ref} - 2U^T B_{qp}^T LX_{ref} + U^T KU + h^T Q h + \underline{x}^T Q \underline{x} - 2\underline{x}^T Q h + U^T W U \qquad (9)$$

Mathematical equivalent transformation is performed on Formula (9) to obtain Formula (10).

$$\underset{U,\underline{x}}{\arg\min}Z = X_0^T A_{qp}^T L A_{qp} X_0 + \parallel X_{ref} \parallel_L^2 - 2A_{qp}X_0 LX_{ref} + h^T Q h + U^T(B_{qp}^T L B_{qp} +$$

$$K + W)U + 2U^T B_{qp}^T(LA_{qp}X_0 - LX_{ref}) + \underline{x}^T Q \underline{x} - 2\underline{x}^T Q h \qquad (10)$$

Mathematical equivalent transformation is performed on Formula (10) to obtain Formula (11).

$$\arg\min_{U,\underline{x}} Z = X_0^T A_{qp}^T L A_{qp} X_0 + \| X_{\text{ref}} \|_L^2 - 2A_{qp}X_0 L X_{\text{ref}} + h^T Q h + $$
$$\begin{bmatrix} U \\ \underline{x} \end{bmatrix}^T \begin{bmatrix} B_{qp}^T L B_{qp} + K + W & 0 \\ 0 & Q \end{bmatrix} \begin{bmatrix} U \\ \underline{x} \end{bmatrix} + 2 \begin{bmatrix} U \\ \underline{x} \end{bmatrix}^T \begin{bmatrix} B_{qp}^T (LA_{qp}X_0 - LX_{\text{ref}}) \\ -Qh \end{bmatrix}^T \quad (11)$$

where W satisfies Formula (12).

$$W = \begin{bmatrix} K & -K & & & & \\ -K & 2K & -K & & & \\ & -K & 2K & -K & & \\ & & \ddots & \ddots & \ddots & \\ & & & -K & 2K & -K \\ & & & & -K & K \end{bmatrix} \quad (12)$$

where $X_0^T A_{qp}^T L A_{qp} X_0 + \| X_{\text{ref}} \|_L^2 - 2A_{qp}X_0 L X_{\text{ref}} + h^T Q h$ does not include a variable U, which does not affect the minimum value of the Z function. Therefore, $X_0^T A_{qp}^T L A_{qp} X_0 + \| X_{\text{ref}} \|_L^2 - 2A_{qp}X_0 L X_{\text{ref}} + h^T Q h$ may not be calculated.

In other words, $\arg\min_{U,\underline{x}} Z$ may be finally expressed by Formula (13).

$$\arg\min_{U,\underline{x}} Z = \frac{1}{2} U^T H U + U^T g \quad (13)$$

where $H = \begin{bmatrix} B_{qp}^T L B_{qp} + K + W & 0 \\ 0 & Q \end{bmatrix}$, and $g = 2 \begin{bmatrix} B_{qp}^T (LA_{qp}X_0 - LX_{\text{ref}}) \\ -Qh \end{bmatrix}$.

Based on the solved **U** and **x** that minimize Z, the optimal first expected moving trajectory in FIG. 4 may be solved, that is, a sequence of values of the center of mass in the z-axis direction corresponding to time steps. In some embodiments of the present disclosure, a full model of the legged robot may also be used to plan the first expected moving trajectory of the legged robot. In this way, accuracy of the first expected moving trajectory can be improved, but higher computing power is often required to achieve real-time planning.

In the embodiments of the present disclosure, a motion trajectory of the center of mass of the legged robot after landing is planned based on the approximate model (or the full model). Therefore, the impact force withstood by each joint and the body rebound can be reduced during the landing of the legged robot, and a good anti-impact protection effect can be achieved on the legged robot while the landing function is ensured.

Next, the process of determining a second expected moving trajectory of the legged robot is described with reference to FIG. 5 and FIG. 6. FIG. 5 is a schematic diagram showing that a robotic leg contacts a plane during landing of a legged robot according to an embodiment of the present disclosure. FIG. 6 is a schematic diagram showing a calculation principle of cubic spline interpolation according to an embodiment of the present disclosure.

As shown in FIG. 5, four robotic legs of the legged robot do not fall onto the ground at the same time, but one after another. After a first robotic leg contacts the ground, it is necessary to ensure that a contact position between the robotic leg and the ground remains unchanged in the whole landing process. The remaining robotic legs contact the plane in sequence, and maintain the contact with the plane after the contact until a center of mass of the legged robot reaches an expected resting height. Therefore, in some embodiments of the present disclosure, a contact position at which an end of a single robotic leg away from the base contacts the plane may be determined at an instantaneous moment the single robotic leg falls onto the ground, and the contact position is used as an expected moving trajectory corresponding to the single robotic leg, and remains unchanged at each time. A motion trajectory of a foot end of each of the remaining robotic legs is determined based on the first expected moving trajectory, and the motion trajectory is used as an expected moving trajectory corresponding to the remaining robotic leg. Finally, the expected moving trajectory corresponding to the single robotic leg and the expected moving trajectory corresponding to the remaining robotic leg are determined as a second expected moving trajectory corresponding to the legged robot. The single robotic leg is a first robotic leg that contacts the ground.

For example, the determining a motion trajectory of a foot end away from a remaining robotic leg based on the first expected moving trajectory includes: determining an initial position of a foot end of the remaining robotic leg based on a position corresponding to the instantaneous moment in the first expected moving trajectory at the instantaneous moment the single robotic leg falls onto the ground (contacts the plane); determining, based on the first expected moving trajectory, position coordinates of the foot end corresponding to the remaining robotic leg corresponding to a stable moment, at the stable moment, a pose of the center of mass of the legged robot returning to be parallel to the plane, the four robotic legs completely contacting the plane, and leg lengths of the four robotic legs being equal; and performing interpolation based on the initial foot end position corresponding to the instantaneous moment and the position coordinates of the foot end corresponding to the remaining robotic leg corresponding to the stable moment (for example, performing interpolation by using cubic spline interpolation), to determine the motion trajectory of the foot end away from the remaining robotic leg.

In the embodiments of the present disclosure, at the instantaneous moment the single robotic leg falls onto the ground, the position coordinates of the foot end of the remaining robotic leg may be correspondingly calculated based on the position and pose of the center of mass of the legged robot, and the position coordinates of the foot end may be used as the initial foot end position at the instantaneous moment of falling onto the ground. The calculation process of the position coordinates of the foot end corresponding to the remaining robotic leg at the stable moment is similar, and the details are not described herein in the embodiments of the present disclosure.

For example, referring to a pose 5-1 of the legged robot in FIG. 5, at the instantaneous moment the single robotic leg falls onto the ground, position coordinates of a foot end of each of other three robotic legs may be correspondingly calculated based on the position and pose of the center of mass of the legged robot, and the position coordinates of the foot end are used as the initial foot end position at the moment of falling onto the ground.

In the embodiments of the present disclosure, the electronic device may input sensing information of the legged robot collected at the current moment into a leg odometer, so that the leg odometer calculates positions of at least two robotic legs of the legged robot at the current moment based on the sensing information to obtain position information.

The position information of the position coordinates of the foot end may include at least directional position vectors of the other three robotic legs in a world coordinate system. Different directional position vectors correspond to different coordinate axis directions. One directional position vector is used for indicating a position of the at least two robotic legs of the legged robot in the corresponding coordinate axis direction. The leg odometer calculates the directional position vector corresponding to a horizontal axis direction in the following manners. First, a rotation matrix may be calculated based on current pose information. The so-called rotation matrix refers to a matrix that maps any vector to a base coordinate system of a robot by changing a direction of any vector. A base pose angle of the legged robot may be determined herein based on the current pose information, and the rotation matrix may be calculated based on the base pose angle. In addition, a reference position vector may also be calculated based on joint angle information of each joint, and the reference position vector is used for indicating a relative position between a center of mass of the base of the legged robot and the foot end of each robotic leg. Next, the rotation matrix may be used to map the reference position vector to the base coordinate system of the robot to obtain a target position vector. The rotation matrix herein may be multiplied by the reference position vector to obtain the target position vector.

In addition, a three-dimensional position vector of the center of mass of the legged robot in the world coordinate system may be first obtained. Then fusion processing is performed on a component of the target position vector in the horizontal axis direction and a component of the three-dimensional position vector in the horizontal axis direction, to obtain the directional position vector corresponding to the horizontal axis direction. The fusion processing herein may include summation processing.

The manner in which the leg odometer calculates the directional position vector corresponding to another coordinate axis (such as a vertical axis or a perpendicular axis) direction is similar to the manner of calculating the directional position vector corresponding to the horizontal axis direction, and details are not described herein again. In addition, the position information may include not only at least two directional position vectors in the world coordinate system, but also another vector such as a foot end position vector or a foot end velocity vector in the base coordinate system of the robot. The foot end position vector is used for indicating three-dimensional positions of the foot ends of the at least two robotic legs of the legged robot in the base coordinate system of the robot. The manner in which the leg odometer calculates the foot end position vector may include: performing inversion processing on the target position vector to obtain the foot end position vector. The foot end velocity vector is used for indicating a three-dimensional velocity of the foot ends of the at least two robotic legs of the legged robot in the base coordinate system of the robot.

The manner in which the leg odometer calculates the foot end velocity vector may include: performing derivation on the target position vector (pf), and performing inversion processing on the derivative result to obtain the foot end velocity vector.

Referring to a pose 5-2 of the legged robot in FIG. 5, in a case that an absolute position of the first robotic leg remains unchanged, if the pose of the center of mass of the legged robot finally returns to a state of being parallel to the plane, the four robotic legs fully contacting the plane, and leg lengths of the four robotic legs being equal, position coordinates of points at which the foot end positions of the other three robotic legs contact the ground are used as foot end position coordinates at the end moment of the landing process.

During the evolution of the legged robot from the pose 5-1 in FIG. 5 to the pose 5-2 in FIG. 5, x- and y-direction sequences of values of the foot end positions of the other three robotic legs are implemented by using the cubic spline interpolation of the positions at the initial moment and the end moment. Similarly, the x- and y-direction sequences of values of the center of mass of the legged robot are implemented by using the cubic spline interpolation of the positions at the initial moment and the end moment.

As shown in FIG. 6, the cubic spline interpolation provided in the embodiments of the present disclosure is dividing known data into a plurality of segments. A cubic function is constructed for each segment, and it is ensured that the curve passes through specific points and that a specific speed constraint is satisfied at some specific points. For example, when the known data includes three pieces of data such as (pa, va, ta), (pb, vb, tb), and (pc, vc, tc), p represents a position, v represents a velocity, and t represents time, and that the known data is divided into two segments is used as an example. For the calculation principle of the cubic spline interpolation, reference may be made to FIG. 6. Two cubic functions $f_1(t)$ and $f_2(t)$ may be constructed first, and then a system of equations may be established based on the two cubic functions and the known data, so that coefficients (a0, a1, a2, a3, b0, b 1, b2, b3) of a cubic polynomial may be solved by using the system of equations. After the coefficients of the cubic polynomial are solved, the two cubic functions may be subsequently used to determine a position and a corresponding velocity of the legged robot at any moment, thereby implementing control of the legged robot.

In the embodiments of the present disclosure, a z-direction sequence of values of the other three robotic legs may be correspondingly solved based on the first expected moving trajectory. After the single robotic leg of the legged robot contacts the plane herein, a length of the remaining robotic leg varies with the height of the center of mass of the legged robot. Therefore, the z-direction sequence of values of the other three robotic legs may be described as the height at which the foot ends of the three robotic legs may just contact the ground when the center of mass of the legged robot reaches the position indicated by the first expected moving trajectory in the direction z. In addition, the z-direction sequences of values of the other three robotic legs may also be solved by using the cubic spline interpolation, and the embodiments of the present disclosure are not limited thereto.

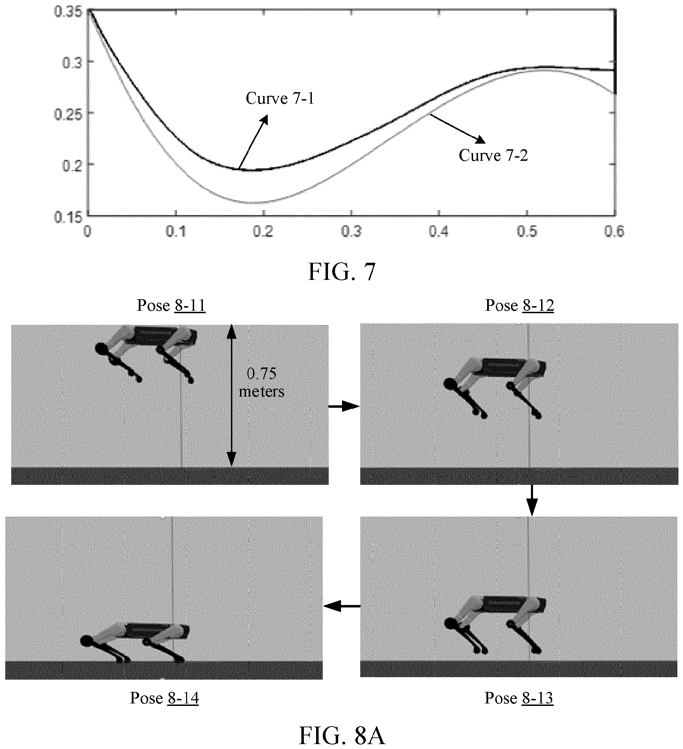

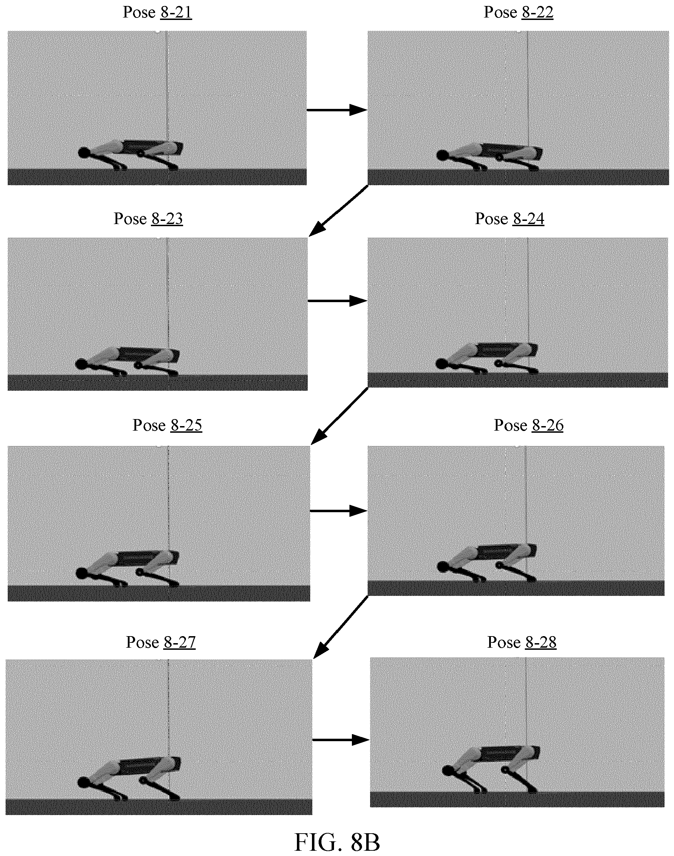

Next, the process of controlling the action of each joint after the legged robot contacts the plane is described with reference to FIG. 7, FIG. 8A, and FIG. 8B. FIG. 7 is a diagram showing comparison between a first expected moving trajectory and an actual trajectory of a center of mass of a legged robot according to an embodiment of the present disclosure. FIG. 8A is a simulation diagram of a legged robot before landing according to an embodiment of the present disclosure. FIG. 8B is a simulation diagram of a legged robot after landing according to an embodiment of the present disclosure.

The scheme of controlling the legged robot based on the dynamic equation of the legged robot and the first expected moving trajectory is also referred to as model predictive control (MPC). The scheme of controlling each joint based on the dynamic equation and a second expected moving trajectory is also referred to as whole-body dynamics control (WBC).

In the embodiments of the present disclosure, the MPC and the WBC are combined to implement the buffer control during the landing. The process of implementing the buffer control includes: optimizing an output of a controller (that is, a torque of each joint motor) by calculating a trajectory of a future control variable (that is, the first expected moving trajectory and the second expected moving trajectory). The optimization process is performed in a limited time window, and initial system information of the time window is used for optimization. A starting moment of the time window is an instant the legged robot contacts the plane, and an ending moment is a moment the legged robot stands stably.

As an example, the dynamic equation of the legged robot may be expressed by Formula (14).

$$\begin{bmatrix} M_p \\ M_\theta \end{bmatrix} \begin{bmatrix} \ddot{p} \\ \ddot{\theta} \end{bmatrix} + \begin{bmatrix} C_p \\ C_\theta \end{bmatrix} = \begin{bmatrix} 0 \\ \tau \end{bmatrix} + \begin{bmatrix} J_p^T \\ J_\theta^T \end{bmatrix} f \qquad (14)$$

First 6 lines of Formula (14) (as shown in Formula (15) below) are particle dynamics information of the legged robot.

$$M_p \ddot{p} + C_p = J_p^T f \qquad (15)$$

where $M_p$ represents a mass and inertia matrix corresponding to a base. $\ddot{p}$ represents a six-dimensional position and pose vector of the center of mass, which is a sequence corresponding to the first expected moving trajectory. In the embodiments of the present disclosure, the position of the center of mass includes a position in a direction of gravity (a direction z), and positions in the direction x, the direction y, and a rotation angle direction are all zero. $f$ represents a contact force provided by the plane to four foot ends, and the contact force provided by the plane to each foot end is a three-dimensional force. Therefore, a total number of dimensions of $f$ is 12. $C_p$ represents a gravity term, a centrifugal force term, and a Coriolis force term of the base. $J_p^T$ represents transpose of the Jacobian matrix of the base. Based on this, the MPC may be used to solve the contact force $f$ provided by the plane to the legged robot. In other words, the contact force between the plane and the legged robot at each time step can be determined based on the dynamic model corresponding to the legged robot, so that the actual trajectory of the center of mass of the legged robot is consistent with the first expected moving trajectory.

The lower half of Formula (14) (as shown in Formula (16) below) is dynamic information for joints of the legged robot.

$$M_\theta \ddot{\theta} + C_\theta = \tau + J_\theta^T f \qquad (16)$$

where $M_\theta$ represents a mass and inertia matrix corresponding to each joint, and $\theta$ represents angles of all drivable degrees of freedom (the quadruped robot shown in FIG. 1 or FIG. 5 includes degrees of freedom corresponding to 12 joint motors). $C_\theta$ represents a gravity term, a centrifugal force term, and a Coriolis force term of a drivable joint. $J_\theta^T$ represents transpose of the Jacobian matrix of the drivable joint. $\ddot{\theta}$ represents an angular acceleration of 12 joints of the legged robot that may be actively driven, $\tau$ is an input torque of the 12 joints. The contact force $f$ calculated according to Formula (15) and other parameters of the robot dynamic model are all known, and the torque $\tau$ of each joint of the robot may be obtained by using Formula (16).

In the embodiments of the present disclosure, Formula (16) may also be written in the form of Formula (17).

$$\tau = -J_\theta^T f + M_\theta \ddot{\theta} + C_\theta \approx -J_\theta^T f + M_\theta \ddot{\theta} \qquad (17)$$

where $\ddot{\theta}$ may be solved by using Formula (18).

$$\ddot{x}^d = J_p \ddot{p} + \dot{J}_p \dot{p} + J_\theta \ddot{\theta} + \dot{J}_\theta \dot{\theta} \qquad (18)$$

where $\ddot{x}^d = k_p(x^d - x) + k_d(\dot{x}^d - \dot{x})$. $x^d$ and $\dot{x}^d$ are determined by the second expected moving trajectory, and $k_p$ and $k_d$ are coefficients for PD control.

In other words, the motor torque provided by each joint motor at each time step is determined based on the dynamic model corresponding to the legged robot and the contact force between the plane and the legged robot at each time step, to enable a trajectory of an end of each robotic leg away from the base to be consistent with the second expected moving trajectory.

As shown in FIG. 7, a curve 7-1 shows the first expected moving trajectory, where the y-axis is a height of the center of mass of the legged robot, and the x-axis is the moment. In FIG. 7, a curve 7-2 shows an actual trajectory of the center of mass, which determines the height of the center of mass of the legged robot at different moments by using the data acquisition apparatus (namely the IMU sensor) mentioned above. It may be seen that through the control of the MPC and the WBC, the actual height of the center of mass of the legged robot may follow the position of the center of mass planned using a simplified model, to implement compliance control of the landing.

As shown in a pose 8-11 to a pose 8-14 in FIG. 8A, in a simulation test, when the legged robot falls from a height of 0.75 meters, a leg length is reduced at an instant the legged robot contacts the ground. Next, as shown in a pose 8-21 to a pose 8-28 of FIG. 8B, during the landing buffer, a distance between the base of the legged robot and the ground is gradually reduced, and legs apply a reaction force to the center of mass of the legged robot. Under the action of the reaction force, a body pose of the legged robot is decelerated, but a foot end height of the legged robot does not rebound from the ground during the body height rebound of the legged robot, which reduces the overshoot in the whole process of the height change of the center of mass. At the end of the compliance control, the legged robot may stand on the ground in a preset pose, and the pose and the height rebound process of the center of mass meet expectations as a whole.

FIG. 7 and FIG. 8B both indicate that in a case that a larger falling speed in the direction z (greater than a velocity threshold) occurs at an instant the legged robot contacts the ground, through application of the embodiments of the present disclosure, the impact of the legged robot on the joints in the whole landing process can be reduced, the rebound of an upper body can be reduced, and the phenomenon of the legs falling onto the ground for the second time after flying can be eliminated, thereby achieving a good anti-impact protection effect on the legged robot while ensuring the landing function.

In the embodiments of the present disclosure, a model is established for the legged robot in free-fall motion, the motion trajectory of the center of mass and the position trajectory of the foot end of the legged robot after landing are planned based on the model, and the control torque of each motor is solved based on the planned motion trajectory of the center of mass and the position trajectory of the foot end, to control the legged robot. Therefore, during the landing of the legged robot, the impact force withstood by each joint can be reduced, the body rebound can be reduced, and a good anti-impact protection effect may be achieved on the legged robot while the landing function is ensured.

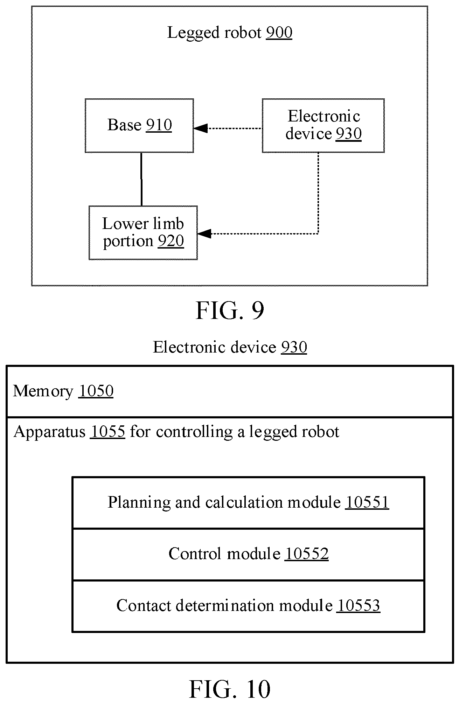

An embodiment of the present disclosure provides a legged robot 900. FIG. 9 is an exemplary block diagram of a legged robot 900 according to an embodiment of the present disclosure.

The legged robot 900 may include a base 910 and a lower limb portion 920 connected to the base 910. The lower limb portion 920 may include at least two robotic legs (for example, four lower limbs). Each of the robotic legs includes a hip joint and a knee joint. The hip joint includes at least two degrees of freedom, and the knee joint includes at least one degree of freedom (for example, each lower limb may include the hip joint having two degrees of freedom and the knee joint having one degree of freedom).

The lower limb portion refers to a legged component of the legged robot for implementing motion, including, for example, a robotic leg and a motor connecting the robotic leg to the base and configured to implement motion control of the robotic leg. The embodiments of the present disclosure are not limited by a specific composition type of the lower limb portion and a quantity of lower limbs of the legged robot.

The base refers to a main body part of the legged robot. For example, the base may be a trunk portion of the legged robot, and the embodiments of the present disclosure are not limited by a specific shape and composition of the base.

In some embodiments, the base includes, for example, 2 spinal joints, and the lower limb portion may include, for example, 8 lower limb joints. The embodiments of the present disclosure are not limited by the quantity of specific joints included in the base and the lower limb portion, and is not limited by the configuration of the specific joint of the legged robot either.

The legged robot may further include an electronic device 930. The electronic device 930 is arranged on the legged robot, can perform the method for controlling a legged robot described above, and has the functions described above.

The electronic device 930 includes, for example, a processing apparatus. The processing apparatus may include a microprocessor, a digital signal processor (DSP), an application-specific integrated circuit (ASIC), a field programmable gate array, a state machine, or another processing device for processing an electrical signal received from a sensor line. The processing device may include a programmable electronic device, for example, a PLC, a programmable interrupt controller (PIC), a programmable logic device (PLD), a programmable read-only memory (PROM), and an electronic programmable read-only memory.

In addition, the legged robot may further include a bus, a memory, a sensor assembly, a communication module, an input/output apparatus, and the like.

The bus may be a circuit that interconnects components of the legged robot and transmits communication information (for example, control messages or data) among the components.

The sensor assembly may be configured to perceive the physical world, including, for example, a camera, an infrared sensor, and an ultrasonic sensor. In addition, the sensor assembly may further include an apparatus for measuring a current operation and motion state of the legged robot, for example, a Hall sensor, a laser position sensor, or a strain force sensor.

The communication module may be connected to a network, for example, in a wired or wireless manner, to facilitate communication with the physical world (for example, a server). The communication module may be wireless and may include a wireless interface, for example, an Institute of Electrical and Electronics Engineers (IEEE) 802.11 interface, a Bluetooth interface, a wireless local area network (WLAN) transceiver, or a radio interface for accessing a cellular telephone network (for example, a transceiver/an antenna for accessing CDMA, GSM, UMTS, or another mobile communication network). In the embodiments of the present disclosure, the communication module may be wired and may include an interface such as an Ethernet interface, a universal serial bus (USB) interface, or an IEEE 1394 interface.

The input/output apparatus may, for example, transmit an instruction or data inputted from a user or any other external device to one or more other components of the legged robot, or may output, to a user or another external device, an instruction or data received from one or more other components of the legged robot.

A plurality of legged robots may constitute a legged robot system to collaboratively complete a task. The plurality of legged robots are communicatively connected to a server, and receive instructions for collaboration of the legged robot from the server.

The following continues to describe an apparatus for controlling a legged robot provided in the embodiments of the present disclosure being implemented as an exemplary structure of a software module. In some embodiments, as shown in FIG. 10, the software module stored in the apparatus 1055 for controlling a legged robot in the memory 1050 of the electronic device 930 may include:

a planning and calculation module 10551, configured to determine a first expected moving trajectory corresponding to the legged robot and determine a second expected moving trajectory corresponding to the legged robot in response to the legged robot falling to contact a plane, the first expected moving trajectory indicating an expected moving trajectory of a center of mass of the legged robot, and the second expected moving trajectory indicating an expected moving trajectory of a foot end of each of the at least two robotic legs; and

a control module 10552, configured to control, based on a dynamic model corresponding to the legged robot, the first expected moving trajectory, and the second expected moving trajectory, an action of each joint after the legged robot contacts the plane.

In the embodiments of the present disclosure, the planning and calculation module 10551 is further configured to determine the first expected moving trajectory corresponding to the legged robot based on an approximate model corresponding to the legged robot in response to the legged robot falling to contact the plane, the legged robot being a single rigid body in the approximate model, and a resultant force of the at least two robotic legs forming upward thrust on the single rigid body during the contact between the legged robot and the plane.

In the embodiments of the present disclosure, the first expected moving trajectory is used to enable combination values of the following to reach an extreme value: a fluctuation quantity of the center of mass of the legged robot, a total quantity of impact forces withstood by the legged robot, a squatting amount of the legged robot, and a sudden change amount of the impact forces withstood by the legged robot.

In the embodiments of the present disclosure, the first expected moving trajectory satisfies the following constraints: a first constraint, used for indicating that an instantaneous impact force is less than a maximum impact force withstandable by the legged robot, the instantaneous impact force referring to the impact force withstood by the legged robot at an instantaneous moment the legged robot contacts the plane; a second constraint, used for indicating that the impact force withstood by the legged robot is less than an upper limit of a support force provided by the plane, and is greater than a lower limit of the support force provided by the plane; and a third constraint, used for indicating that a height of the center of mass of the legged robot is greater than a minimum height.

In the embodiments of the present disclosure, the planning and calculation module 10551 is further configured to: determine a contact position where a foot end of a single robotic leg contacts the plane at an instantaneous moment the single robotic leg contacts the plane, and use each contact position corresponding to each time step as an expected moving trajectory corresponding to the single robotic leg, each contact position remaining unchanged at each time step; determine a motion trajectory of a foot end of a remaining robotic leg based on the first expected moving trajectory, and use the motion trajectory as an expected moving trajectory corresponding to the remaining robotic leg, the remaining robotic leg referring to the robotic leg other than the single robotic leg in the at least two robotic legs; and determine the expected moving trajectory corresponding to the single robotic leg and the expected moving trajectory corresponding to the remaining robotic leg as the second expected moving trajectory corresponding to the legged robot.

In the embodiments of the present disclosure, the planning and calculation module 10551 is further configured to: determine an initial foot end position corresponding to the remaining robotic leg at the instantaneous moment based on a position corresponding to the instantaneous moment in the first expected moving trajectory at the instantaneous moment the single robotic leg contacts the plane; determine position coordinates of the foot end corresponding to the remaining robotic leg at a stable moment based on the first expected moving trajectory, at the stable moment, a pose of the center of mass of the legged robot returning to be parallel to the plane, the at least two robotic legs contacting the plane, and leg lengths of the at least two robotic legs being equal; and perform interpolation based on the initial foot end position and the position coordinates of the foot end corresponding to the remaining robotic leg at the stable moment, to obtain the motion trajectory of the foot end of the remaining robotic leg.

In the embodiments of the present disclosure, the control module 10552 is further configured to, by controlling the action of each joint after the legged robot contacts the plane, control the single robotic leg of the legged robot to first contact the plane and maintain the contact position unchanged, and control the remaining robotic leg to contact the plane in sequence and then maintain the contact with the plane until the center of mass of the legged robot reaches an expected resting height.

In the embodiments of the present disclosure, the first expected moving trajectory indicates that after the legged robot contacts the plane, the height of the center of mass of the legged robot gradually decreases and then gradually increases.

In the embodiments of the present disclosure, the second expected moving trajectory indicates that after a single robotic leg of the legged robot contacts the plane, a length of the remaining robotic leg varies with the height of the center of mass of the legged robot.

In the embodiments of the present disclosure, the term "expected" involved in the expected moving trajectory can also be replaced by "predicted". That is, the first and second expected moving trajectories in the present disclosure can also be understood as the first and second predicted moving trajectories.

In the embodiments of the present disclosure, the controlling, based on a dynamic model corresponding to the legged robot, the first expected moving trajectory, and the second expected moving trajectory, an action of each joint after the legged robot contacts the plane includes: determining a contact force between the plane and the legged robot at each time step based on the dynamic model corresponding to the legged robot, the contact force being used for controlling an actual trajectory of the center of mass of the legged robot to be consistent with the first expected moving trajectory; and determining, based on the dynamic model corresponding to the legged robot and each contact force, a motor torque provided by each joint motor at each time step, the motor torque being used for controlling a trajectory of the foot end of each of the at least two robotic legs to be consistent with the second expected moving trajectory.

In the embodiments of the present disclosure, the apparatus 1055 for controlling a legged robot further includes a contact determination module 10553, configured to: determine contact information based on current state information of the legged robot, the contact information indicating a contact state between the at least two robotic legs and the plane at a current moment; and determine, based on the contact information, that the legged robot falls to contact the plane.

In the embodiments of the present disclosure, the contact determination module 10553 is further configured to: obtain a historical state value of any one of the robotic legs at a previous moment of the current moment; determine a current state value of the robotic leg based on the current state information of the legged robot; determine, based on the current state value and the historical state value, whether a sudden change to the current state value occurs; and determine the contact information corresponding to the robotic leg depending on whether the sudden change to the current state value occurs.

In the embodiments of the present disclosure, the current state information includes at least one of the following: a joint motor torque or a current value or a voltage value of the at least two robotic legs; the height of the center of mass and the pose of the center of mass of the legged robot, and current joint angle information corresponding to the at least two robotic legs; a current plantar tactile feedback value corresponding to the at least two robotic legs; and a current acceleration of the legged robot in a vertical direction.

It may be understood that the embodiments of the present disclosure relate to related data such as motion information of the legged robot. User permission or consent needs to be obtained when the embodiments of the present disclosure are applied to specific products or technologies, and the collection, use, and processing of related data need to comply with relevant laws, regulations, and standards of relevant countries and regions.

The program part of the technology may be considered as a "product" or "artifact" existing in the form of executable code and/or related data, which is involved in or implemented by using a computer-readable medium. A tangible and permanent storage medium may include an internal memory or a memory used by any computer, processor, or similar device, or related module, for example, various semiconductor memories, tape drives, disk drives, or any similar device capable of providing storage functions for software.

All or a part of the software may sometimes communicate over a network, such as the Internet or another communication network. The software may be loaded from a computer device or a processor to another through such communication. Therefore, another medium capable of transferring a software element may alternatively be used for physical connection between local devices. For example, a light wave, a radio wave, an electromagnetic wave, and the like are propagated through cables, optical cables, air, and the like. The physical medium for carrying waves, for example, a similar device such as a cable, a wireless connection, or an optical cable, may alternatively be considered as a medium that carries the software. Unless the usage herein limits a tangible "storage" medium, another term that represents a computer- or machine- "readable medium" represents a medium involved during execution of any instruction by a processor.

Specific terms are used in the present disclosure to describe the embodiments of the present disclosure. For example, "the embodiments of the present disclosure" and/or "some embodiments of the present disclosure" mean specific features, structures, or characteristics related to at least one embodiment of the present disclosure. Therefore, "the embodiments of the present disclosure" or "some embodiments of the present disclosure" mentioned twice or a plurality of times at different locations in the present disclosure does not necessarily refer to the same embodiment. In addition, some features, structures, or characteristics of one or more embodiments of the present disclosure may be properly combined.

In addition, it is understood by a person skilled in the art that all aspects of the present disclosure may be illustrated and described by using several categories or circumstances, including any new and useful combination of processes, machines, products, or substances, or any new and useful improvement thereof. Accordingly, all aspects of the present disclosure may be completely executed by hardware, may be completely executed by software (including firmware, resident software, microcode, and the like), or may be executed by a combination of hardware and software. The foregoing hardware or software may be referred to as "data block", "module", "engine", "unit", "component", or "system". In addition, various aspects of the present disclosure may be embodied as a computer product located in one or more computer-readable media, the product including computer-readable program code.

Unless otherwise defined, all terms (including technical and scientific terms) used herein have the same meaning as commonly understood by a person of ordinary skill in the art to which the present invention belongs. It is further to be understood that, the terms such as those defined in commonly used dictionaries are to be interpreted as having meanings that are consistent with the meanings in the context of the related art, and are not to be interpreted in an idealized or extremely formalized sense, unless explicitly defined in this way herein.

The foregoing is descriptions of the present disclosure, and not to be considered as a limitation on the present disclosure. Although several exemplary embodiments of the present disclosure are described, a person skilled in the art may easily understand that, many modifications may be made to the exemplary embodiments without departing from novel teaching and advantages of the present disclosure. Therefore, all such modifications are intended to be included within the scope of the present disclosure defined by the claims. It is to be understood that, the foregoing is descriptions of the present disclosure, and is not to be considered to be limited to the disclosed specific embodiments, and modifications to the disclosed embodiments and other embodiments are intended to be included within the scope of the appended claims. The present disclosure is subject to the claims and equivalents thereof.

## Claims

1. A method for controlling a legged robot, the legged robot comprising a base and at least two robotic legs, each of the robotic legs comprising at least one j oint, the method comprising:

    determining a first expected moving trajectory and a second expected moving trajectory corresponding to the legged robot in response to the legged robot falling to contact a plane, wherein the first expected moving trajectory indicates an expected moving trajectory of a center of mass of the legged robot, and the second expected moving trajectory indicates an expected moving trajectory of a foot end of each of the at least two robotic legs; and

    controlling, based on a dynamic model corresponding to the legged robot, the first expected moving trajectory and the second expected moving trajectory, an action of each joint after the legged robot contacts the plane.

2. The method of claim 1, wherein determining the first expected moving trajectory corresponding to the legged robot in response to the legged robot falling to contact the plane comprises:
determining the first expected moving trajectory corresponding to the legged robot based on an approximate model corresponding to the legged robot in response to the legged robot falling to contact the plane, wherein the legged robot is a single rigid body in the approximate model, and a resultant force of the at least two robotic legs forms upward thrust on the single rigid body during the contact between the legged robot and the plane.

3. The method of claim 2, wherein the first expected moving trajectory is used to enable combination values of the following to reach an extreme value: a fluctuation quantity of the center of mass of the legged robot, a total quantity of impact forces withstood by the legged robot, a squatting amount of the legged robot, and a sudden change amount of the impact forces withstood by the legged robot.

4. The method of claim 3, wherein the first expected moving trajectory satisfies the following constraints:

    a first constraint, used to indicate that an instantaneous impact force is less than a maximum impact force withstandable by the legged robot, wherein the instantaneous impact force refers to the impact force withstood by the legged robot at an instantaneous moment the legged robot contacts the plane;
    a second constraint, used to indicate that the impact force withstood by the legged robot is less than an upper limit of a support force provided by the plane, and is greater than a lower limit of the support force provided by the plane; and
    a third constraint, used to indicate that a height of the center of mass of the legged robot is greater than a minimum height.

5. The method of claim 1, wherein determining the second expected moving trajectory corresponding to the legged robot comprises:

determining a contact position where a foot end of a single robotic leg contacts the plane at an instantaneous moment the single robotic leg contacts the plane, and determining each contact position corresponding to each time step as an expected moving trajectory corresponding to the single robotic leg, wherein each contact position remains unchanged at each time step;

determining a motion trajectory of a foot end of a remaining robotic leg based on the first expected moving trajectory, and determining the motion trajectory as an expected moving trajectory corresponding to the remaining robotic leg, wherein the remaining robotic leg refers to the robotic leg other than the single robotic leg in the at least two robotic legs; and

determining the expected moving trajectory corresponding to the single robotic leg and the expected moving trajectory corresponding to the remaining robotic leg as the second expected moving trajectory corresponding to the legged robot.

6. The method of claim 5, wherein determining the motion trajectory of the foot end of the remaining robotic leg based on the first expected moving trajectory comprises:

determining, at the instantaneous moment the single robotic leg contacts the plane, an initial foot end position corresponding to the remaining robotic leg at the instantaneous moment based on a position corresponding to the instantaneous moment in the first expected moving trajectory;

determining position coordinates of the foot end corresponding to the remaining robotic leg at a stable moment based on the first expected moving trajectory, wherein at the stable moment, a pose of the center of mass of the legged robot returns to be parallel to the plane, the at least two robotic legs contact the plane, and leg lengths of the at least two robotic legs are equal; and

performing interpolation based on the initial foot end position and the position coordinates of the foot end corresponding to the remaining robotic leg at the stable moment, to obtain the motion trajectory of the foot end of the remaining robotic leg.

7. The method of any one of claims 1 to 6, wherein controlling the action of each joint after the legged robot contacts the plane comprises:
by controlling the action of each joint after the legged robot contacts the plane, controlling the single robotic leg of the legged robot to first contact the plane and maintaining the contact position unchanged, and controlling the remaining robotic leg to contact the plane in sequence and then maintaining the contact with the plane until the center of mass of the legged robot reaches an expected resting height.

8. The method of any one of claims 1 to 6, wherein the first expected moving trajectory indicates that after the legged robot contacts the plane, the height of the center of mass of the legged robot gradually decreases and then gradually increases.

9. The method of claim 8, wherein the second expected moving trajectory indicates that after a single robotic leg of the legged robot contacts the plane, a length of the remaining robotic leg varies with the height of the center of mass of the legged robot.

10. The method of any one of claims 1 to 6, wherein controlling, based on the dynamic model corresponding to the legged robot, the first expected moving trajectory and the second expected moving trajectory, the action of each joint after the legged robot contacts the plane comprises:

determining a contact force between the plane and the legged robot at each time step based on the dynamic model corresponding to the legged robot, wherein the contact force is used for controlling an actual trajectory of the center of mass of the legged robot to be consistent with the first expected moving trajectory; and

determining, based on the dynamic model corresponding to the legged robot and each contact force, a motor torque provided by each joint motor at each time step, wherein the motor torque is used for controlling a trajectory of the foot end of each of the at least two robotic legs to be consistent with the second expected moving trajectory.

11. The method of any one of claims 1 to 6, wherein before the legged robot falls to contact the plane, the method further comprises:

> determining contact information based on current state information of the legged robot, wherein the contact information indicates a contact state between the at least two robotic legs and the plane at a current moment; and determining, based on the contact information, that the legged robot falls to contact the plane.

12. The method of claim 11, wherein determining the contact information based on the current state information of the legged robot comprises:

> obtaining a historical state value of any one of the robotic legs at a previous moment of the current moment; determining a current state value of the robotic leg based on the current state information of the legged robot; determining, based on the current state value and the historical state value, whether a sudden change to the current state value occurs; and determining the contact information corresponding to the robotic leg depending on whether the sudden change to the current state value occurs.

13. The method of claim 11, wherein the current state information comprises at least one of the following:

> a joint motor torque or a current value or a voltage value of the at least two robotic legs; the height of the center of mass and the pose of the center of mass of the legged robot, and current joint angle information corresponding to the at least two robotic legs; current plantar tactile feedback values corresponding to the at least two robotic legs; or a current acceleration of the legged robot in a vertical direction.

14. An apparatus for controlling a legged robot, the legged robot comprising a base and at least two robotic legs, each of the robotic legs comprising at least one joint, the apparatus comprising:

> a planning and calculation module, configured to determine a first expected moving trajectory and a second expected moving trajectory corresponding to the legged robot in response to the legged robot falling to contact a plane, wherein the first expected moving trajectory indicates an expected moving trajectory of a center of mass of the legged robot, and the second expected moving trajectory indicates an expected moving trajectory of a foot end of each of the at least two robotic legs; and a control module, configured to control, based on a dynamic model corresponding to the legged robot, the first expected moving trajectory and the second expected moving trajectory, an action of each joint after the legged robot contacts the plane.

15. A legged robot, comprising:

> a base; a lower limb portion, connected to the base, wherein the lower limb portion comprises at least two robotic legs, each of the robotic legs comprising a hip joint and a knee joint, the hip joint comprising at least two degrees of freedom, and the knee joint comprising at least one degree of freedom; and an electronic device, arranged on the legged robot and configured to perform the method for controlling a legged robot of any one of claims 1 to 13.

16. An electronic device for controlling a legged robot, comprising:

> a processor, and a memory, having stored therein a computer-executable program which, when executed by the processor, causes the processor to perform the method for controlling a legged robot of any one of claims 1 to 13.

17. A computer-readable storage medium having stored therein a computer-executable program which, when executed by a processor, causes the processor to perform the method for controlling a legged robot of any one of claims 1 to 13.

18. A computer program product, comprising a computer-executable program, the computer-executable program, when executed by a processor, implementing the method for controlling a legged robot of any one of claims 1 to 13.

Image 1-1 Image 1-2

FIG. 1

S201 — In response to a legged robot falling onto the ground to contact a plane, determine a first expected moving trajectory and a second expected moving trajectory corresponding to the legged robot

S202 — Control, based on a dynamic model corresponding to the legged robot, the first expected moving trajectory and the second expected moving trajectory, an action of each joint after the legged robot contacts the plane

FIG. 2

Legged robot 3-1

Plane 3-2

FIG. 3

FIG. 4

FIG. 5

FIG. 6

FIG. 7

Pose <u>8-11</u>                    Pose <u>8-12</u>

0.75 meters

Pose <u>8-14</u>                    Pose <u>8-13</u>

FIG. 8A

Pose 8-21

Pose 8-22

Pose 8-23

Pose 8-24

Pose 8-25

Pose 8-26

Pose 8-27

Pose 8-28

FIG. 8B

Legged robot 900

Base 910

Electronic device 930

Lower limb portion 920

FIG. 9

Electronic device 930

Memory 1050

Apparatus 1055 for controlling a legged robot

Planning and calculation module 10551

Control module 10552

Contact determination module 10553

FIG. 10

## INTERNATIONAL SEARCH REPORT

| International application No. |
| --- |
| **PCT/CN2023/092460** |

**A. CLASSIFICATION OF SUBJECT MATTER**

B25J9/16(2006.01)i; G05D1/08(2006.01)i

According to International Patent Classification (IPC) or to both national classification and IPC

**B. FIELDS SEARCHED**

Minimum documentation searched (classification system followed by classification symbols)

IPC: B25J G05D

Documentation searched other than minimum documentation to the extent that such documents are included in the fields searched

CNTXT, ENTXT, DWPI, CNKI: 机器人, 足, 脚, 腿, 关节, 下落, 接触, 期望, 轨迹, 路径, 质心, 重心, 动力学, 模型, robot?, foot, feet, leg+, joint+, drop+, expect+, path+, centroid+, gravity, kinet+, model+

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | CN 113359800 A (UBTECH ROBOTICS CORP.) 07 September 2021 (2021-09-07) description, paragraphs 62-158, and figures 1-12 | 1, 14-18 |
| A | CN 114474034 A (TENCENT TECHNOLOGY (SHENZHEN) CO., LTD.) 13 May 2022 (2022-05-13) entire document | 1-18 |
| A | CN 114137992 A (SHENZHEN PENGXING INTELLIGENT RESEARCH CO., LTD.) 04 March 2022 (2022-03-04) entire document | 1-18 |
| A | CN 113524177 A (SOUTHERN UNIVERSITY OF SCIENCE AND TECHNOLOGY) 22 October 2021 (2021-10-22) entire document | 1-18 |
| A | US 2013079929 A1 (SAMSUNG ELECTRONICS CO., LTD.) 28 March 2013 (2013-03-28) entire document | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 August 2023** | **31 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/092460**

| Patent document cited in search report | | | Publication date (day/month/year) | Patent family member(s) | | | Publication date (day/month/year) |
|---|---|---|---|---|---|---|---|
| CN | 113359800 | A | 07 September 2021 | WO | 2023273107 | A1 | 05 January 2023 |
| CN | 114474034 | A | 13 May 2022 | WO | 2022089195 | A1 | 05 May 2022 |
| | | | | EP | 4144487 | A1 | 08 March 2023 |
| | | | | US | 2023076589 | A1 | 08 March 2023 |
| CN | 114137992 | A | 04 March 2022 | | None | | |
| CN | 113524177 | A | 22 October 2021 | CN | 113524177 | B | 29 November 2022 |
| US | 2013079929 | A1 | 28 March 2013 | EP | 2574527 | A2 | 03 April 2013 |
| | | | | KR | 20130034082 | A | 05 April 2013 |

Form PCT/ISA/210 (patent family annex) (July 2022)

**EP 4 393 656 A1**

## REFERENCES CITED IN THE DESCRIPTION

### Patent documents cited in the description

- CN 202210877092